Europäisches Patentamt

European Patent Office

Office européen des brevets

(11) Veröffentlichungsnummer: **0 025 536**
**A1**

(12) **EUROPÄISCHE PATENTANMELDUNG**

(21) Anmeldenummer: **80105138.4**

(22) Anmeldetag: **28.08.80**

(51) Int. Cl.³: **G 11 B 5/47**

(30) Priorität: **12.09.79 DE 2936896**

(43) Veröffentlichungstag der Anmeldung: **25.03.81**
**Patentblatt 81/12**

(84) Benannte Vertragsstaaten: **AT BE CH FR GB IT LI LU NL SE**

(71) Anmelder: **SIEMENS AKTIENGESELLSCHAFT Berlin und München, Postfach 22 02 61, D-8000 München 22 (DE)**

(72) Erfinder: **Gottwald, Winfried, Kirchplatz 6 b, D-8033 Martinsried (DE)**

(54) Schaltungsanordnung zum mehrkanaligen Aufzeichnen von digitalen Signalen auf magnetischen Aufzeichnungsträgern.

(57) Bei einer Schaltungsanordnung mit einem Magnetkopfsystem je Aufzeichnungskanal besitzt jedes Magnetkopfsystem eine separate Vormagnetisierungswicklung (11), und die Vormagnetisierungswicklungen aller Magnetkopfsysteme sind in Reihe geschaltet und an eine gemeinsame Vormagnetisierungsstromquelle (2) angeschlossen.

EP 0 025 536 A1

0025536

SIEMENS AKTIENGESELLSCHAFT    Unser Zeichen
BERLIN UND MÜNCHEN            VPA
                             **79 p 2 0 5 6** EUR

Schaltungsanordnung zum mehrkanaligen Aufzeichnen von
digitalen Signalen auf magnetischen Aufzeichnungsträgern.

Die Erfindung bezieht sich auf eine Schaltungsanordnung
zum mehrkanaligen Aufzeichnen von digitalen Signalen
auf magnetischen Aufzeichnungsträgern, wobei jedem
Aufzeichnungskanal ein Magnetkopfsystem zugeordnet
ist.

Die Speicherung digitaler Daten in Magnetschichten erfordert für die modernen, hohen Aufzeichnungsdichten
(von z.B. 9042 fci bei dem Aufzeichnungsverfahren GCR)
eine spezielle Dimensionierung des Schreibstromes, um
eine möglichst verzerrungsfreie Aufzeichnung und Wiedergabe der Daten zu erreichen. Bekanntlich setzt sich
der den Magnetkopfsystemen zuzuführende Schreibstrom
aus einem für die zu speichernden Daten repräsentativen Recteckstrom mit teilweiser Stromüberhöhung
und einem hochfrequentem Vormagnetisierungsstrom zu-

Kar 1 Stl / 6.9.79

sammen; d.h. für ein Magnetkopfsystem ist eine Stromquelle für den die zu speichernden Daten repräsentierenden Rechteckstrom und eine zweite Stromquelle für den hochfrequenten Vormagnetisierungsstrom erforderlich.

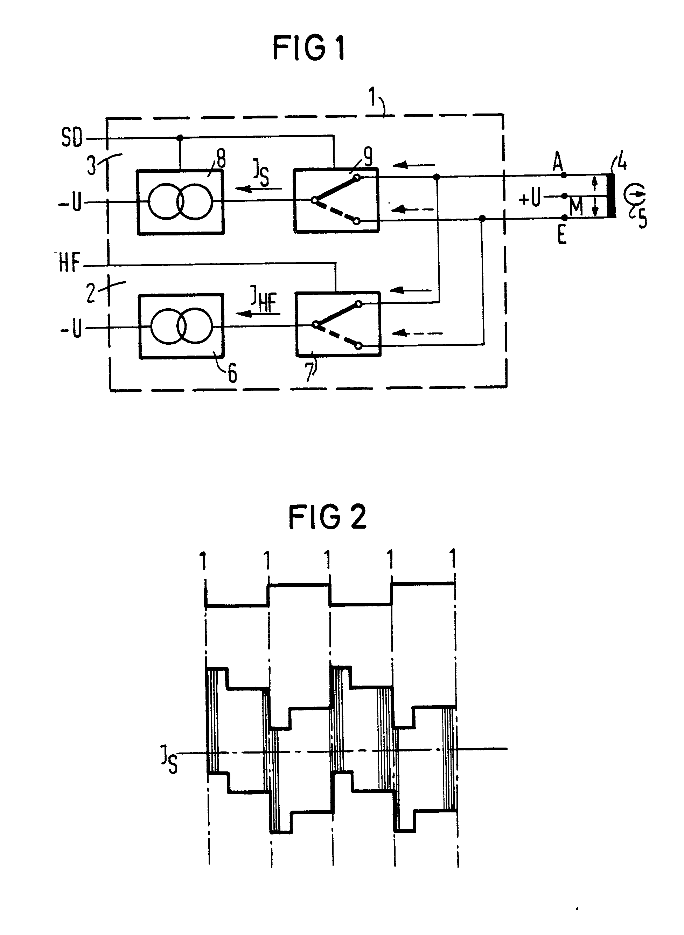

FIG 1 zeigt den Aufbau des Schreibverstärkers 1 für einen Datenkanal. Die Schaltung besteht aus einem Hochfrequenzteil 2 und einem Datenübertragungsteil 3. Beide Teile wirken gemeinsam auf eine Schreibwicklung 4 des Magnetkopfsystemes 5.

Der Hochfrequenzteil 2 besteht aus einer stromprägenden Schaltungsanordnung 6 und einem Schalter 7, der den Strom $I_{HF}$ im Takt des angelegten Hochfrequenzsignals HF von der Spannungsquelle +U über die Mittenanzapfung M der Schreibkopfwicklung 4 weiter über deren Anfang A bzw. deren Ende E fließen läßt. Damit wird am Schreibspalt des Magnetkopfsystemes 5 ein magnetisches Wechselfeld erzeugt, das eine Vormagnetisierung der Magnetschicht bewirkt.

Der Datenübertragungsteil 3 besteht aus einer stromprägenden Schaltungsanordnung 8 und einem Schalter 9, der in Abhängigkeit von dem angelegten Schreibdatensignal SD die Stromrichtung in der Schreibwicklung 4 des Magnetkopfsystemes 5 bestimmt. Mit jedem Potentialwechsel dieses Signales wird gleichzeitig die stromprägende Schaltungsanordnung 8 derart umgeschaltet, daß der Schreibstrom $I_S$ für einen Bruchteil der Zeit, bezogen auf den kürzesten Potentialwechselabstand, um einen bestimmten Faktor erhöht wird. Im Magnetkopf-system 5 überlagern sich somit ein vormagnetisierendes Hochfrequenzfeld und ein bei jedem Wechsel kurzzeitig überhöhtes Signalfeld ( FIG 2).

FIG 1  zeigt den Schreibverstärker 1  und den Schreibkopf 5  für eine Spur. Bei mehrkanäligen Systemen, z.B. neunspurigen Systemen für DV-Bandgeräte steigt der beim Schreiben für die Ansteuerung der Magnetkopfsysteme notwendige Aufwand mit der Anzahl der Kanäle (Spuren).

Der Erfindung lag daher die Aufgabe zugrunde, eine Schaltungsanordnung zu schaffen, mit der dieser hohe Aufwand wesentlich verringert wird. Erfindungsgemäß wird dies bei einer Schaltungsanordnung zum mehrkanaligen Aufzeichnen von digitalen Signalen auf magnetischen Aufzeichnungsträgern, wobei jedem Aufzeichnungskanal ein Magnetkopfsystem zugeordnet ist, dadurch erreicht, daß jedes Magnetkopfsystem mit einer separaten Vormagnetisierungswicklung versehen ist und die Vormagnetisierungswicklungen aller Magnetkopfsysteme in Reihe geschaltet an eine gemeinsame Quelle für den Vormagnetisierungsstrom angeschlossen sind. Durch diese Maßnahme wird erreicht, daß für sämtliche Magnetkopfsysteme eines Magnetkopfes für mehrkanalige Aufzeichnung von digitalen Signalen nicht mehr in jedem Schreibverstärker ein eigenes Hochfrequenzteil vorgesehen werden muß, sondern daß ein einziges Hochfrequenzteil für alle Magnetkopfsysteme eines Magnetkopfes ausreicht.

Ein Verkoppeln der Datensignale der einzelnen Spuren über den gemeinsamen Vormagnetisierungsstrom wird vorteilhafterweise dadurch vermieden, daß die Vormagnetisierungswicklungen der Magnetkopfsysteme von einem eingeprägten Strom durchflossen werden. Dadurch wird erreicht, daß eine vom Datensignalfluß  induzierte Spannung keinen Strom und damit keinen koppelnden Magnetfluß erzeugen kann.

Ferner ist es vorteilhaft, die Vormagnetisierungswicklungen der Magnetkopfsysteme derart in Reihe zu schalten, daß der gemeinsame Vormagnetisierungsstrom die Vormagnetisierungswicklungen benachbarter Magnetkopfsysteme in entgegengesetzter Richtung durchfließt. Dadurch wird das Übersprechen bezogen auf einen in unmittelbarer Nähe angeordneten Lesekopf stark reduziert.

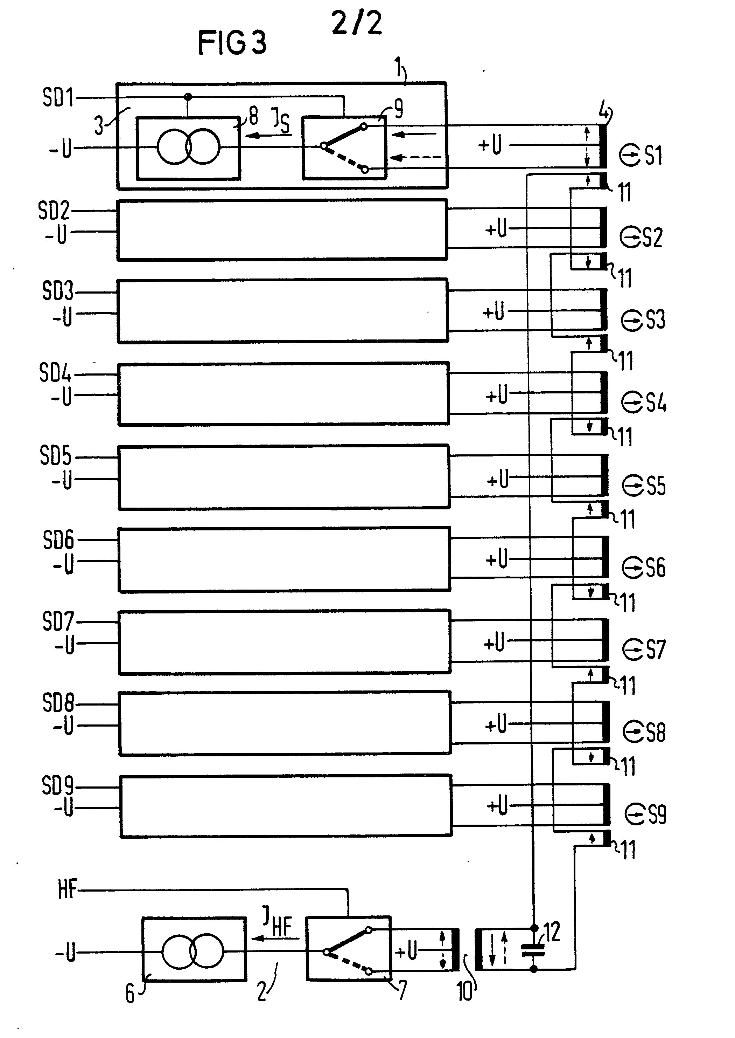

Weitere Einzelheiten der Erfindung ergeben sich aus der nachfolgenden Beschreibung eines Ausführungsbeispieles anhand von FIG 3.

FIG 3  zeigt den prinzipiellen Aufbau eines neun-kanaligen Schreibverstärkers. Die Schaltung zeigt in jedem der neun Kanäle einen gegenüber FIG 1  unveränderten Datenübertragungsteil 3  aus einer stromprägenden Schaltungsanordnung 8  und einem Schalter 9, der in Abhängigkeit von dem angelegten Schreibdatensignal SD1...SD9 die Stromrichtung in der Schreibwicklung 4  des jeweiligen Magnetkopfsystemes 5  bestimmt. Außerdem ist ein für alle Kanäle (Spuren) S1...S9  gemeinsamer Hochfrequenzteil 2  vorgesehen. Dieser besteht wie im Beispiel von FIG 1  aus einer stromprägenden Schaltungsanordnung 6  und einem Schalter 7,  der in Abhängigkeit von dem angelegten Hochfrequenzsignal HF  die Stromrichtung in der Primärwicklung des Übertragers 10  bestimmt. Der hochfrequente Wechselstrom auf der Sekundärseite des Übertragers 10  durchfließt die neun in Serie geschalteten Vormagnetisierungswicklungen 11,  die gegenüber dem Ausführungsbeispiel von FIG 1  auf jedem der Magnetkopfsysteme 5  vorgesehen sind. Die Serienschaltung der neun Vormagnetisierungswicklungen wird vorteilhafterweise derart vorgenommen, daß der Vormagnetisierungsstrom die Vormagnetisierungswicklungen benachbarter Magnetkopfsysteme in entgegengesetzter Richtung durchfließt und somit in benachbarten Magnetkopfsystemen HF-Magnetfelder entgegengesetzter Polarität
erzeugt werden. Dadurch wird das Übersprechen bezogen
auf einen in unmittelbarer Nähe angeordneten Lesekopf
wesentlich verringert.

Der Wirkungsgrad der gesamten Schaltungsanordnung wird
optimal, wenn der Wert des parallel zur Sekundärwicklung des Übertragers 10 angeordneten Kondensators 12
so gewählt wird, daß die Resonanzfrequenz des Schwingkreises, bestehend aus dem Übertrager 10, dem Kondensator 12 und der aus den Vormagnetisierungswicklungen
11 bestehenden induktiven Last gleich der Frequenz des
Vormagnetisierungsstromes $I_{HF}$ ist. Die Verwendung
eines Übertragers 10 für die HF-Vormagnetisierung
bringt sowohl schaltungstechnische Vorteile wegen
der symmetrischen Erzeugung durch den primärseitigen
Mittelabgriff des Übertragers 10, als auch die Möglichkeit, in wenig aufwendiger Weise eine Impedanzanpassung
der Vormagnetisierungswicklungen 11 an den Generator
2 zu verwirklichen. Dies gilt insbesondere, wenn beispielsweise integrierte Magnetköpfe eingesetzt werden
und dabei die Vormagnetisierungswicklung jeweils nur
aus einer einzigen Windung besteht.

Die Erfindung wurde in Verbindung mit den dargestellten
Ausführungsbeispielen anhand von Magnetkopfsystemen
erläutert, die nur zum Schreiben von Daten vorgesehen
sind. Eine solche Ausgestaltung ist immer dann zweckmäßig, wenn für das Lesen der aufgezeichneten Daten
je Kanal ein separater Lesekopf vorgesehen ist. Ohne
von dem Prinzip der vorliegenden Erfindung abzugehen,
ist es aber genausogut möglich, die in den Ansprüchen
angegebene Lehre auf sogenannte kombinierte Magnetköpfe
anzuwenden, d.h. Magnetköpfe, die je Kanal nur einen Magnetspalt und eine gemeinsame Schreib/Lesewicklung
besitzen.

Patentansprüche

1. Schaltungsanordnung zum mehrkanaligen Aufzeichnen von digitalen Signalen auf magnetischen Aufzeichnungsträgern, wobei jedem Aufzeichnungskanal ein Magnetkopfsystem zugeordnet ist, d a d u r c h   g e k e n n - z e i c h n e t , daß jedes Magnetkopfsystem mit einer separaten Vormagnetisierungswicklung versehen ist und die Vormagnetisierungswicklungen aller Magnetkopfsysteme in Reihe geschaltet an eine gemeinsame Quelle für den Vormagnetisierungsstrom angeschlossen sind.

2. Schaltungsanordnung nach Anspruch 1, d a d u r c h   g e k e n n z e i c h n e t , daß die Vormagnetisierungswicklungen der Magnetkopfsysteme derart in Reihe geschaltet sind, daß der Vormagnetisierungsstrom die Vormagnetisierungswicklungen benachbarter Magnetkopfsysteme in entgegengesetzter Richtung durchfließt.

3. Schaltungsanordnung nach Anspruch 1 oder 2, d a - d u r c h   g e k e n n z e i c h n e t , daß die Vormagnetisierungswicklungen der Magnetkopfsysteme von einem eingeprägten Strom durchflossen werden.

FIG 1

SD

3

8

$J_S$

9

−U

A

+U

M

E

4

5

HF

2

$J_{HF}$

−U

6

7

1

FIG 2

1   1   1   1   1

$J_S$

FIG 3  2/2  0025536

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>US - A - 3 987 488</u> (KENJI KANAI et al.)<br>    * Bilder 13-14; Spalte 5, Zeile 26 - Spalte 6, Zeile 8 *<br><br>-- | 1-3 |
| X | <u>US - A - 2 829 209</u> (CRAIN)<br>    * Bilder 1,2; Spalte 2, Zeile 50 - Spalte 4, Zeile 51 *<br><br>-- | 1 |
| X | FUNKSCHAU, Band 50, Nr. 25, Dezember 1978, Seiten 117-120<br>München, DE.<br>G. CORINTH: "Ein hochwertiger Magnetton-Aufsprechverstärker"<br><br>-- | 1,3 |
| X | IEEE TRANSACTIONS ON MAGNETICS, Band MAG-15, Nr. 3, Juli 1979, Seiten 1130-1134<br>New York, U.S.A.<br>KENJI KANAI et al.: "High Track Density Thin-Film Tape Heads"<br>    * Bild 1; Seite 1130, rechte Spalte, Zeilen 10-19 *<br><br>-- | 1 |
| A | <u>DE - A - 2 728 169</u> (HONEYWELL) | 1 |
| A | <u>US - A - 3 829 896</u> (I.B.M.)<br>    * Bild 1; Spalte 2, Zeile 37 - Spalte 3, Zeile 11 *<br><br>-- | 1 |
| A | <u>DE - B - 1 029 586</u> (SIEMENS)<br>    * Bild 4; Spalte 3, Zeile 36 - Spalte 4, Zeile 9 *<br><br>-- | 1 |

**KLASSIFIKATION DER ANMELDUNG (Int. Cl.³)**

G 11 B 5/47

**RECHERCHIERTE SACHGEBIETE (Int. Cl.³)**

G 11 B 5/47

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 06-12-1980 | CARTRYSSE |

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der Maßgeblichen Teile | betrifft Anspruch | |
| | IBM TECHNICAL DISCLOSURE BULLETIN, Band 18, Nr. 10, März 1976, Seite 3150 New York, U.S.A. J.W. BROCK et al.: "Ac-biased read head" | 1 | |
| | | | **RECHERCHIERTE SACHGEBIETE (Int. Cl.³)** |

EPA Form 1503.2   06.78